Europäisches Patentamt

European Patent Office

Office européen des brevets

(11) Numéro de publication : **0 109 898**
**B1**

(12) **FASCICULE DE BREVET EUROPÉEN**

(45) Date de publication du fascicule du brevet :
**30.09.87**

(21) Numéro de dépôt : **83402199.0**

(22) Date de dépôt : **15.11.83**

(51) Int. Cl.⁴ : **G 06 F 13/00**

(54) **Unité de stockage temporaire de données organisée en file d'attente.**

(30) Priorité : **15.11.82 FR 8219093**

(43) Date de publication de la demande :
**30.05.84 Bulletin 84/22**

(45) Mention de la délivrance du brevet :
**30.09.87 Bulletin 87/40**

(84) Etats contractants désignés :
**BE CH DE GB IT LI NL SE**

(56) Documents cités :
**EP-A- 0 048 586**
**DE-A- 1 524 233**
**US-A- 2 907 004**
**US-A- 4 125 870**
**IBM TECHNICAL DISCLOSURE BULLETIN, vol. 9, no. 4, septembre 1966, New York (US), W. TEO: "Sequential access buffer control", pages 374-375**

(73) Titulaire : **Helen, André**
**7, Allée des Fougères Louannec**
**F-22700 Perros Guirec (FR)**

**Servel, Michel**
**Le Rhu en Servel**
**F-22300 Lannion (FR)**

**Thomas, Alain**
**Ar Santé L 222**
**F-22300 Lannion (FR)**

(72) Inventeur : **Helen, André**
**7, Allée des Fougères Louannec**
**F-22700 Perros Guirec (FR)**
Inventeur : **Servel, Michel**
**Le Rhu en Servel**
**F-22300 Lannion (FR)**
Inventeur : **Thomas, Alain**
**Ar Santé L 222**
**F-22300 Lannion (FR)**

(74) Mandataire : **Fort, Jacques et al**
**CABINET PLASSERAUD 84, rue d'Amsterdam**
**F-75009 Paris (FR)**

## Description

La présente invention concerne le stockage temporaire de données sous forme de file d'attente du type premier entré, premier sorti, qu'on désignera par la suite par l'abréviation habituelle de pile ou file FIFO. Elle trouve des applications dans chacun des domaines où une mémoire tampon est nécessaire du fait qu'il n'y a pas de coïncidence entre sources des signaux d'entrée représentatifs d'événements externes et instants d'utilisation de ces signaux. A titre d'exemples d'application, on peut citer le mixage d'informations, le lissage, le passage d'un rythme d'arrivée de signaux d'entrée à un rythme d'utilisation, le déphasage d'informations et le multiplexage.

On peut distinguer deux genres d'unités de stockage du type file FIFO (le terme d'unité désignant tout à la fois les éléments de stockage proprement dits et leur système de gestion). La première technique consiste à utiliser un empilement de registres dans lesquels l'information progresse. L'intérêt de cette solution est d'assurer un asynchronisme total entre l'entrée et la sortie, l'inconvénient est d'une part la capacité limitée, d'autre part, l'existence d'un temps de propagation de l'entrée à la sortie qui augmente avec la capacité de l'empilement de registres. Une autre technique consiste à utiliser une mémoire vive de stockage à accès aléatoire ou RAM associée à une logique de gestion. On peut arriver ainsi à des capacités importantes, mais en contrepartie il n'y a plus asynchronisme complet entre l'entrée et la sortie.

La présente invention vise à fournir une unité de stockage du type file FIFO utilisant une mémoire vive, qui répond mieux que celles antérieurement connues aux exigences de la pratique, notamment en ce qu'elle permet d'obtenir un temps d'accès indépendant de la capacité tout en assurant un asynchronisme entre l'entrée et la sortie.

On connaît déjà (EP-A-0 048 586) une unité de stockage temporaire conforme au préambule de la revendication 1. Toutefois, la gestion de cette unité est telle que l'on adresse alternativement la mémoire vive en écriture et en lecture, la disposition proposée ayant pour but de permettre d'adopter une fréquence de signal d'écriture supérieure à celle du signal de lecture.

La présence du registre tampon placé en sortie lecture de la mémoire vive permet d'anticiper une demande de lecture vers la mémoire de façon à pouvoir disposer de l'information immédiatement après une demande de l'utilisateur.

La présente invention vise à fournir une unité de stockage du type File FIFO du genre défini dans le préambule de la revendication 1, répondant mieux que celles antérieurement connues aux exigences de la pratique, notamment en ce qu'elle permet d'obtenir un temps d'accès indépendant de la capacité de l'unité de stockage, tout en assurant un asynchronisme entre l'entrée et la sortie et en permettant d'approcher des limites théoriques de rapidité, correspondant à l'enchaînement sans temps mort des cycles d'écriture et de lecture. Dans ce but, l'invention propose une unité de stockage temporaire conforme à la partie caractérisante de la revendication 1.

Grâce à la présence des registres tampon en entrée et en sortie de la mémoire vive :

en écriture, il y a formulation d'une demande : les informations d'entrée restent présentes jusqu'à la prochaine demande et l'écriture dans la mémoire RAM se fait automatiquement à un instant choisi par une logique d'allocation appartenant au système de gestion ;

en lecture, une demande formulée accède à l'information et la lecture en mémoire RAM se fait automatiquement à un instant quelconque entre cette demande et la suivante. Les cycles d'accès à la mémoire RAM sont fixés par une horloge extérieure de pilotage.

La logique d'allocation appartenant au système de gestion, étant à exclusion mutuelle, allouera les canaux fournis par l'horloge soit à l'écriture, soit à la lecture en inhibant, en réponse à une demande d'écriture ou de lecture, l'autre opération avant exécution de la première. La logique d'allocation sera généralement munie d'une entrée de priorité, permettant de trancher en cas de demandes simultanées en inhibant la demande non prioritaire.

La logique d'allocation peut notamment comporter deux bascules affectées l'une à l'écriture en mémoire RAM, l'autre à la lecture dans cette mémoire. Le résultat du traitement des demandes d'écriture et de lecture DE et DL est validé périodiquement, au rythme de l'horloge H, dans ces bascules. La montée de l'une annonce l'enclanchement d'un cycle d'écriture, la montée de l'autre l'enclanchement d'un cycle de lecture. La logique d'exclusion répond alors aux conditions suivantes :

Elle prend en compte une demande quellè qu'elle soit, si elle est isolée ;

elle inhibe toute possibilité de saisie de la demande concurrente si la demande prioritaire est présente ;

si la demande non prioritaire est d'abord présente seule, elle la laisse progresser jusqu'à la bascule de saisie correspondante ; mais si la demande prioritaire survient avant cette saisie, elle inhibe dans un premier temps la demande concurrente sur la bascule de saisie concernée avant d'apparaître dans un second temps sur sa propre bascule de saisie.

On voit que l'intervalle qui sépare l'instant d'inhibition d'une demande de l'instant d'exécution de l'autre constitue un temps de garde, qui sera sélectionné en fonction du temps de réponse de la logique, interdisant de façon absolue la montée simultanée des deux bascules de saisie.

Si l'unité ne comportait qu'un seul registre de sortie, le découplage entre l'entrée et la sortie d'informations dans l'unité de stockage ne serait que partielle. En effet, il ne conduirait au fonctionnement

**0 109 898**

totalement asynchrone en écriture et lecture que si les périodes de lecture et d'écriture satisfaisaient à des contraintes de durée :

la période $T_E$ ou $T_L$ de la transaction (écriture ou lecture) considérée comme prioritaire pour la logique d'allocation doit être au moins égale au double de la durée $T_H$ de traitement d'un cycle par l'ensemble constitué du système de gestion et de la mémoire ;

la période de la transaction non prioritaire doit être supérieure à 3 T.

Ces valeurs de $T_E$ et $T_L$ sont assez éloignées des performances optimales de l'unité, considérées comme correspondant à l'entraînement sans temps mort des cycles d'écriture et de lecture. Deux exemples suffisent à le montrer.

En cas de fonctionnement très dissymétrique où le rythme des transactions est faible vis-à-vis de l'autre, la priorité étant donnée à la plus rapide, la période minimale de cette dernière sera de 2 T alors qu'on peut espérer s'approcher aussi près de T que le permettent les temps morts.

En cas de fonctionnement avec rythmes d'écriture et de lecture plésiochrones, on doit pouvoir approcher des conditions $T_E \simeq 2\,T$ et $T_L \simeq 2\,T$, alors qu'en fait on est limité à $T_E \simeq 3\,T$ et $T_L \simeq 3\,T$ avec un seul registre.

La présence de deux registres de sorties en cascade permet d'approcher des conditions limites théoriques : les demandes de l'utilisateur peuvent être anticipées, du fait que les registres effectuent eux-mêmes les demandes de transaction à la logique d'allocation lorsque les conditions de cette transaction sont réunies. Ils suppriment, par là, la nécessité de disposer d'au moins une période entière T pour chaque demande de transaction (écriture ou lecture) et autorisent une utilisation complète de l'ensemble des possibilités d'accès à la mémoire vive au travers du système de gestion.

L'invention sera mieux comprise à la lecture de la description qui suit de modes particuliers de réalisation donné à titre d'exemples non limitatifs, et de la comparaison qui en est faite avec une unité suivant l'art antérieur. La description se réfère aux dessins qui l'accompagnent, dans lesquels :

la Figure 1 est un schéma de principe d'une unité de stockage temporaire organisée en file d'attente, de type connu, utilisant une mémoire RAM,

la Figure 2, similaire à la Figure 1, est un schéma de principe d'une unité, comportant un registre de sortie en plus d'une mémoire RAM,

la Figure 3 est un schéma de principe d'une unité de stockage temporaire constituant la réalisation de l'invention, à un registre d'entrée et deux registres de sortie,

les Figures 4, 5 et 6 sont des schémas synoptiques de détail, montrant respectivement la constitution d'une logique de gestion d'entrée, d'une logique de gestion de sortie, et d'une logique d'allocation écriture/lecture utilisables dans la réalisation de la Figure 3,

la Figure 7 est un schéma de principe, très simplifié, d'un circuit de gestion des adresses d'écriture et de lecture en mémoire RAM, également utilisable dans la réalisation montrée en Figure 3,

la Figure 8 est un diagramme montrant comment s'effectue l'inhibition de l'écriture en mémoire RAM lorsque la file est pleine, l'inhibition de lecture en cas de détection de file vide s'effectuant de façon similaire.

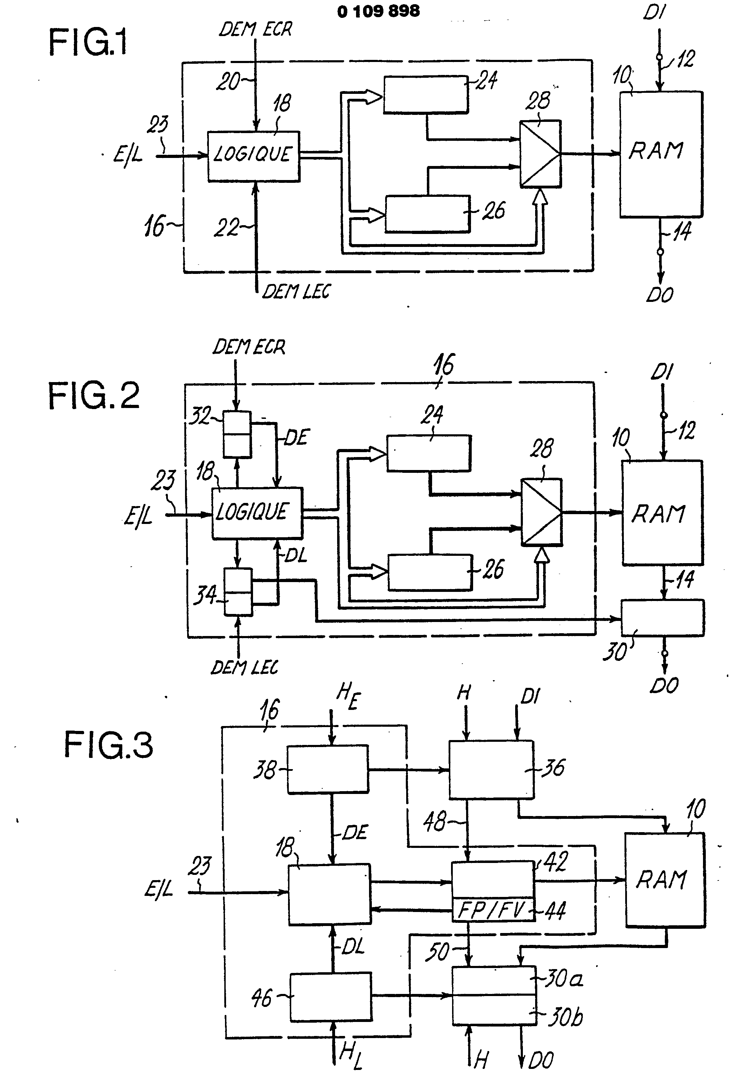

Avant d'exposer l'invention, on rappellera brièvement, en faisant référence à la figure 1, la constitution générale d'une unité de stockage à mémoire RAM organisée en file FIFO. L'unité montrée en figure 1 comporte une mémoire RAM 10 munie d'une entrée 12 sur laquelle sont appliquées les données d'entrée DI et d'une sortie 14 sur laquelle l'utilisateur reçoit les données de sortie DO en réponse à une demande de lecture. La mémoire RAM 10 est associée à un système de gestion 16. Ce dernier peut être regardé comme comportant une logique d'allocation 18 qui reçoit, en 20 et 22, les demandes d'écriture et de lecture. La logique 18 est munie d'une entrée 23 de commande de priorité en écriture ou en lecture E/L. Elle comporte encore des pointeurs d'écriture et de lecture 24 et 26 permettant de détecter les états de pile vide et de pile pleine et un multiplexeur d'adresses 28.

Le fonctionnement d'une telle unité est bien connu : pour provoquer l'écriture en mémoire RAM 10, on fournit les données à charger en DI, accompagnées d'un signal de demande d'écriture. Les données sont prises en compte au bout d'un temps fonction des demandes de lecture et d'une règle de priorité. Ce temps est matérialisé par la génération d'un signal d'acquittement par la logique d'allocation 18.

En lecture, on effectue une demande qui est prise en compte par la logique d'allocation 18. L'information DO est disponible en sortie de la mémoire vive RAM 10 au bout d'un temps variable qui sera, comme pour l'écriture, repéré par un signal de validation.

On voit apparaître l'inconvénient principal d'une telle unité, qui est l'absence d'asynchronisme entre écriture et lecture du fait que la mémoire constitue un point de couplage qui ne peut être accédé simultanément en lecture et en écriture en réponse à des demandes simultanées en 20 et 22.

Le mode de réalisation d'une unité de stockage, schématisé en figure 2 (où les organes correspondant à ceux de la figure 1 sont désignés par les mêmes numéros de référence) comporte un registre tampon de sortie 30 interposé entre la sortie de la mémoire RAM 10 et la sortie de données DO de l'unité. La logique de gestion 16 doit alors assurer de plus la gestion du registre de sortie. L'utilisateur n'accède à la mémoire RAM 10 qu'à travers cette logique. Sur la figure 2, elle est montrée associée à deux bascules 32 et 34. La bascule de lecture 34 reçoit les demandes de lecture DEM LEC de l'utilisateur

3

(organe d'entrée de ligne de télécommunication par exemple). Lorsque cette bascule reçoit une telle demande de lecture et un signal de validation de la logique 18, elle est positionnée à zéro et engendre une demande DL de lecture en mémoire RAM 10. Dès qu'un cycle de lecture sera accordé, la bascule 34 sera repositionnée à 1 et le registre 30 rechargé.

La bascule 32, qui peut comme la bascule 34, être intégrée à la logique 18, permet de transmettre les demandes DE d'écriture en RAM à la mémoire RAM 10, les conflits d'accès en mémoire RAM étant réglés suivant la priorité sélectionnée à l'aide de l'entrée 23.

L'horloge de séquencement nécessaire au fonctionnement, fournissant un signal d'horloge de rythme H, n'a pas été représentée sur les figures 1 et 2. Les périodes de cette horloge déterminent les cycles d'accès à la mémoire et le nombre de transactions ne peut évidemment dépasser le nombre de cycles d'horloge, de période $T_H$.

Vus de l'extérieur, les instants d'écriture en mémoire RAM et de lecture du registre tampon de sortie 30 sont quelconques et éventuellement simultanés. Le fonctionnement interne n'en reste pas moins synchrone et fixé par l'horloge, dont la période $T_H$ doit être compatible avec les périodes $T_L$ et $T_E$ des rythmes de lecture et d'écriture.

La période $T_H$ déterminant la fréquence des possibilités d'accès en mémoire RAM, l'inégalité suivante doit dans tous les cas être vérifiée :

$$1/T_H \geqslant 1/T_L + 1/T_E \tag{1}$$

Dans le cas d'une situation symétrique où $T_E = T_L > 3\ T_H$, on pourra toujours satisfaire une demande d'écriture pendant la présence $T_E$ de l'information : il suffit de maintenir celle-ci sous forme parallèle pendant une durée $T_E$ à l'entrée de la mémoire RAM 10 après avoir fait une demande d'écriture DEM LEC. Symétriquement, une demande d'information DO en sortie sera satisfaite en venant lire l'information en sortie dans le registre 30 pendant un temps $T_L$ après une demande de lecture.

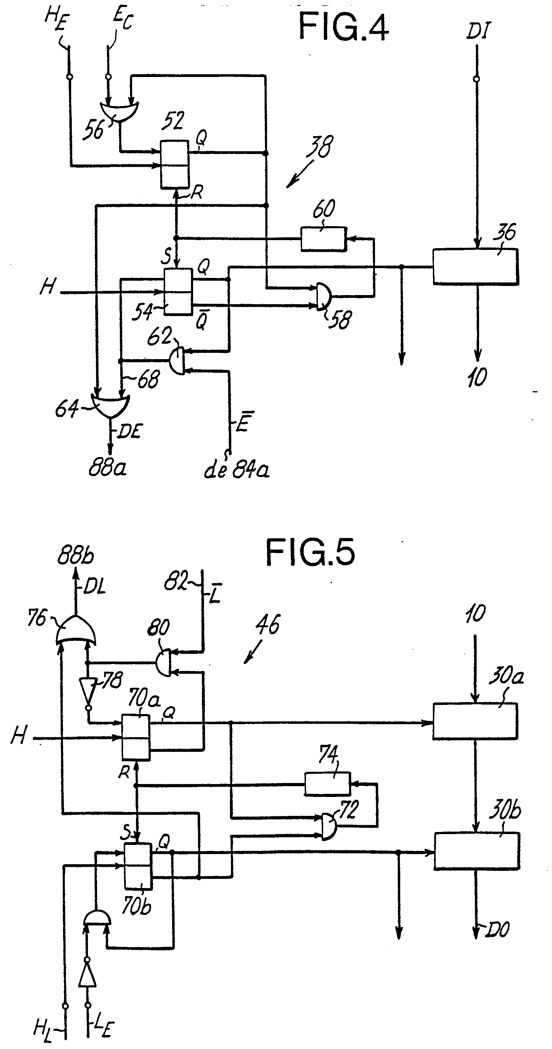

On décrira maintenant, en faisant référence à la figure 3, le schéma de principe d'un circuit applicable dans tous les cas où la relation (1) est satisfaite, sans toutefois évidemment arriver à l'égalité entre les deux termes de la relation.

Le circuit dont le principe est montré en figure 3 (où les organes correspondant à ceux de la figure 1 portent le même numéro de référence) comporte non seulement un registre tampon de sortie, mais aussi un registre tampon d'entrée 36 et, au surplus, pour tenir compte du fait que l'ordre de lecture $H_L$ ne peut être formulé que si les données sont déjà disponibles en sortie et ne laisse pas, comme c'était le cas pour l'écriture, une période complète $T_L$ de $H_L$ disponible pour satisfaire la demande, deux registres tampons en cascade 30a et 30b sont prévus au lieu d'un seul.

Le système de gestion 16 peut être regardé comme comportant :

une logique 38 de gestion d'entrée, associée au registre tampon d'entrée 36. Le registre 36 a un nombre n d'éléments binaires ou « bits » correspondant à celui dans chaque mot en mémoire. La logique 38, de gestion du registre d'écriture, effectue des demandes d'écriture à la logique d'allocation 18,

une logique d'allocation écriture/lecture 18, qui accorde les cycles (au rythme $T_H$) à la lecture ou à l'écriture en fonction des demandes et de la priorité accordée à l'une ou à l'autre, affichée en 23,

un circuit 42 de gestion des adresses d'écriture et de lecture dans la mémoire RAM 10 qui comporte des moyens 44 de détection de file pleine ou file vide qui bloquent respectivement les demandes d'écriture ou de lecture qui ne pourraient être servies,

une logique 46 de gestion des deux registres tampons de lecture 30a et 30b, composés chacun de n éléments binaires.

Des commandes supplémentaires peuvent être prévues pour permettre d'utiliser des registres externes (non représentés) et d'augmenter la longueur des mots au-delà du nombre d'éléments binaires des registres 36, 30a et 30b.

La logique de gestion d'entrée 38 peut avoir la constitution de principe montrée en figure 4 et qui autorise le fonctionnement aussi bien lorsque l'information provient d'un convertisseur série/parallèle que lorsqu'elle est directement disponible en parallèle. Cette logique 38 est prévue pour charger de façon asynchrone le registre 36 lorsque deux conditions sont remplies : le registre 36 est vide et une information DI est disponible en entrée. Le registre 36 doit alors être chargé pour stocker temporairement les informations d'entrée DI en attendant leur transfert dans la mémoire RAM 10.

Pour cela, la logique de gestion d'entrée comporte deux bascules 52 et 54.

La bascule 52 est prévue pour être positionnée dès qu'une demande de chargement est formulée en $E_C$. Dans le cas où l'information serait appliquée en parallèle, un 1 serait maintenu en permanence sur l'entrée de la bascule 52 au lieu du signal de demande $E_C$. Quant à la bascule 54, elle est prévue pour provoquer par son passage à 1 le chargement des informations d'entrée dans le registre 36.

Comme le montre la figure 4, l'entrée d'horloge de la bascule 52, du type D, est reliée à l'entrée de rythme d'écriture $H_E$. L'entrée de la bascule est reliée à la sortie d'une porte OU 56 qui reçoit le signal de demande d'écriture $E_C$ et la sortie Q de la bascule 52.

La bascule 54 de son côté reçoit le signal de rythme H sur son entrée d'horloge. Sa sortie $\bar{Q}$ est reliée

aux entrées d'une porte ET 58 dont l'autre entrée est reliée à la sortie Q de 52 et dont la sortie revient, par l'intermédiaire d'un élément 60 fournissant un retard correspondant au temps de traversée d'une porte (dont le rôle apparaîtra plus loin), aux entrées de remise à zéro R de la bascule 52 et de positionnement S de la bascule 54. La sortie Q de la bascule 54 attaque également une des entrées d'une porte ET 62 dont la sortie est reliée, d'une part, à l'entrée de la bascule 54, d'autre part, à l'une des entrées d'une porte OU 64 dont la sortie constitue la demande DE d'écriture en mémoire.

On voit que l'état 1 de la bascule 52 indique qu'une information est accessible en entrée et que l'état 1 de la bascule 54 indique que le registre 36 est plein. Alors que la bascule 52 est positionnée à 1 par une action extérieure (signaux $H_E$ et $E_C$), la remise à zéro de 54 est effectuée après chaque cycle d'écriture. L'existence simultanée des états 1 de 52 et 0 de 54 assure la remise à zéro de la première bascule et le forçage à 1 de la seconde bascule.

De façon plus complète, le fonctionnement de la logique de gestion d'entrée 38 est le suivant.

Lors de l'apparition d'une information DI en entrée de la file, la bascule 52 est positionnée à 1 par le signal de demande. Si le registre 36 est vide (ce qui correspond à l'état 0 à la sortie Q de la bascule 54), la porte ET 58 est alors passante et le signal de niveau 1 à sa sortie est transmis à l'entrée S de la bascule 54 par l'intermédiaire d'un circuit à retard 60 ce qui fait passer la sortie Q de la bascule 54 à l'état 1, ce qui provoque le chargement du registre 36.

De plus, l'apparition du signal de niveau 1 à la sortie de la porte ET 58 a pour effet de ramener à zéro avec le même retard (circuit 60) la sortie Q de la bascule 52, avec un retard fixé par 60. Le signal en sortie Q de la bascule 52, qui correspond à une demande de chargement du registre tampon d'entrée 36, est également transmis, à travers une porte OU 64, pour fournir un signal de demande d'écriture en mémoire DE dont l'exploitation sera exposée en détail plus loin.

La bascule 54 est commandée pour remise à zéro de manière cadencée par l'horloge qui détermine la durée des périodes d'écriture ou de lecture en mémoire RAM 10. La bascule 54 n'est remise à zéro (ce qui libère le registre 36 pour un nouveau chargement) que lorsque la porte ET 62 délivre un signal de niveau zéro, validé par l'horloge H, c'est-à-dire lorsque le signal $\bar{E}$ (E étant le signal de commande d'écriture en mémoire RAM 10) sur la seconde entrée de la porte 62 est au niveau zéro, ou, en d'autres termes, lorsqu'une demande d'écriture de la mémoire a été effectuée pendant le cycle précédant l'impulsion d'horloge.

La sortie de la porte ET 62 est également reliée à l'une des entrées de la porte OU 64, pour fournir un signal de demande d'écriture DE en mémoire RAM 10.

Ainsi, quand le signal à la sortie Q de la bascule 52 disparaît, par activation de l'entrée de restauration R, mais qu'il n'y a pas eu d'écriture en mémoire RAM 10, le registre 36 n'est pas disponible pour être à nouveau chargé. La demande d'écriture de l'information contenue dans le registre 36 en mémoire RAM est maintenue par la connexion 68 entre la sortie de la porte ET 62 et la porte OU 64.

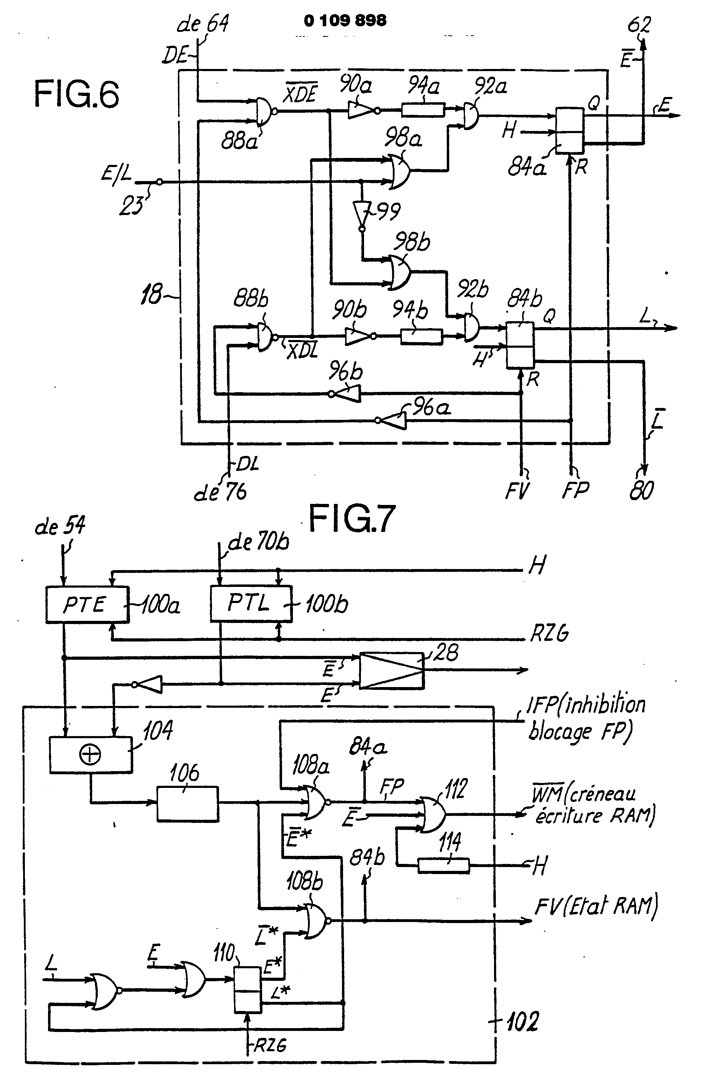

La logique 46 de gestion des registres de sortie 30a et 30b peut avoir une constitution générale similaire à celle de la logique 38 associée au registre tampon d'entrée. Dans le cas montré en figure 5, elle comporte encore deux bascules 70a et 70b du type « D », dont les sorties Q attaquent cette fois les entrées de commande des registres 30a et 30b, respectivement. L'état 1 de la bascule 70a indique la présence d'informations dans le registre 30a. L'état 1 de la bascule 70b indique la présence d'informations dans le registre 30b. Chaque cycle de lecture interne en mémoire RAM 10 charge le registre 30a et positionne la bascule 70a à l'état 1. Une lecture provoquée par l'application des signaux $H_L$ et $L_E$ vide le registre 30b et remet à zéro la bascule 70b. Comme dans le cas de l'écriture, le circuit se prête aussi bien au cas où on veut utiliser l'information de sortie de l'unité de stockage en mode série que dans celui où on veut en disposer sous forme parallèle, avec les mêmes modifications dans l'attaque des bascules.

Le fonctionnement de la logique 46 est le suivant : dans leur état normal, avant lecture du registre 30b, les registres 30a et 30b sont chargés respectivement par les informations de rang n et n + 1 de la mémoire RAM 10. Une lecture du registre 30b libère ce dernier pour un chargement par l'information suivante. Elle se traduit par une mise à zéro de la sortie Q de la bascule 70b. A cet instant, la bascule 70a ayant sa sortie Q à l'état 1, une porte ET 72 (dont les entrées sont reliées à la sortie Q de 70a et $\bar{Q}$ de 70b) délivre un signal qui agit, avec un retard fixé par un élément 74, sur l'entrée de positionnement S de la bascule 70b, transférant ainsi, dans le registre 30b, l'information contenue en 30a et indiquant un nouvel état occupé de 30b. Le signal est également appliqué sur l'entrée de remise à zéro de la bascule 70a, ce qui libère le registre 30a de l'information qui vient d'être transférée dans le registre 30b. La sortie $\bar{Q}$ de 70b envoie de son côté une demande DL de lecture de la mémoire RAM 10 par l'intermédiaire d'une porte OU 76. La bascule 70a, commandée en séquence par la même horloge H que la bascule 54 de la logique d'entrée, est remise à 1 lors de l'apparition d'un 1 en sortie de l'inverseur 78 qui reçoit un 0 de la porte ET 80. Cette remise à 1 ou positionnement de la bascule 70a intervient lorsque la connexion 82 reçoit le signal $\bar{L} = 0$ (L étant le signal de commande de lecture en mémoire), c'est-à-dire lorsqu'une lecture de la mémoire a été demandée et ordonnée. Tant que cette demande de lecture n'a pas été ordonnée, la sortie de la porte 80 reste à 1 et maintient une demande de lecture de la mémoire RAM 10 par l'intermédiaire de la porte OU 76.

La logique d'allocation écriture/lecture 18 a un rôle essentiel. Elle va permettre un fonctionnement à exclusion mutuelle interdisant de façon absolue la présence simultanée d'un ordre de lecture et d'un ordre d'écriture en mémoire RAM 10. Cette logique est prévue de façon que toute action, constituée par une demande de lecture ou d'écriture, n'est validée qu'après inhibition de l'autre type de demande, avec possibilité de suppression ou inhibition de la première demande si celle-ci est indiquée comme non prioritaire par l'affichage en 23 (figure 3).

La figure 6 montre un mode de réalisation possible de la logique d'allocation 18, qui effectue l'allocation en fonction des demandes DE et DL formulées par les logiques 38 et 46 (figures 4 et 5). Le rôle du circuit d'allocation 18 est d'attribuer les créneaux fournis par l'horloge de rythme, de période $T_H$, à l'écriture, à la lecture, ou à aucune des deux s'il n'y a pas de demande. En cas de conflit, la priorité doit être accordée à l'écriture ou à la lecture suivant l'indication E/L fournie en 23.

Le circuit comporte deux bascules 84a et 84b destinées à indiquer l'allocation : l'état E = 1 sur la sortie Q de la bascule 84a indique un cycle d'écriture, l'état L = 1 à la sortie Q de la bascule 84b indique un cycle de lecture. Un mécanisme d'exclusion mutuelle est prévu pour interdire la montée simultanée des deux bascules. Il comporte, à chaque entrée de bascule, une porte ET d'inhibition 92a ou 92b à deux entrées. La première entrée reçoit le signal de demande DE ou DL à travers une porte ET-NON 88a ou 88b, un inverseur 90a ou 90b et un élément 94a ou 94b fournissant un retard correspondant approximativement à la durée d'une traversée de porte. Cet élément à retard 94a ou 94b garantit que l'inhibition d'une bascule est opérationnelle avant l'action sur l'autre bascule. La logique 18 coopère avec des moyens 44 de détection de file pleine ou de file vide en RAM. Ces moyens sont prévus pour fournir des signaux de limite FP et FV appliqués respectivement aux entrées de remise à zéro des bascules 84a et 84b. Les signaux de pile pleine et de pile vide sont également appliqués, par l'intermédiaire d'inverseurs 96a et 96b respectivement, aux secondes entrées des portes ET-NON 88a et 88b. Ces portes valident donc les demandes d'allocation d'écriture ou de lecture par une opération logique de la forme :

$$XDE = DE \times \overline{FP}$$

$$XDL = DL \times \overline{FV}$$

Une priorité à l'écriture est assurée en appliquant un 1 logique sur l'entrée 23. Ce 1 logique est transmis par la porte OU 98a à la porte ET 92a d'exclusion. La priorité à la lecture est assurée en appliquant un 0 logique sur l'entrée 23. En réponse, un inverseur 99 applique un 1 logique à la porte OU 98b qui la transmet à la porte ET 92b.

Le fonctionnement de la logique 18 est le suivant, si l'on suppose une demande d'écriture DE formulée alors qu'il n'y a pas de conflit avec une demande de lecture et que la file n'est pas pleine, la porte ET-NON 88a émet un zéro qui est inversé par l'inverseur 90a. La porte ET 92a émet alors, avec un retard fixé par l'élément 94a, un 1 car, en l'absence de demande de lecture, la porte ET-NON 88b applique un 1 à l'entrée de la porte 92a par l'intermédiaire de la porte OU 98a. La demande d'écriture DE est alors validée en commande E d'écriture en mémoire RAM 10.

Le fonctionnement de la logique est identique pour la commande de lecture, en l'absence de conflit. IL fait intervenir la partie du circuit symétrique de celle qui vient d'être envisagée (portes 88b, 92b, inverseur 90b, bascule 84b).

Il faut noter au passage que la priorité en cas de présence simultanée d'une demande d'écriture et de lecture, matérialisée par le signal appliqué sur l'entrée 23, sera choisie pour donner priorité au rythme le plus élevé des demandes en lecture et/ou en écriture.

Si la priorité est donnée à la lecture, c'est-à-dire qu'un niveau 0 est appliqué sur l'entrée 23, en cas de présence simultanée de DE et DL (en supposant bien entendu que la file n'est ni vide ni pleine), les portes ET-NON 88a et 88b fournissent toutes deux un 0 logique qui sera transformé en 1 par les inverseurs respectifs 90a et 90b. Par l'intermédiaire des portes OU 98a et 98b et de l'inverseur 99, le signal de priorité au niveau 0 en 23 impose un 0 sur la seconde entrée de la porte 92a et un 1 sur la seconde entrée de la porte 92b. Cette dernière seule fournit un 1 qui valide la bascule 84b de commande de lecture en mémoire RAM 10. Les éléments à retard 94a et 94b évitent la présence simultanée de commandes d'écriture et de lecture dans le cas où la demande prioritaire apparaît avant l'instant où s'effectue la décision, fixé par un coup de l'horloge H, alors qu'une demande non prioritaire est déjà présente.

Entre la logique 18 et la mémoire RAM 10 doit être prévu un circuit de gestion d'adresses dans cette mémoire. De plus, étant donné que la file FIFO réalisée à partir de la RAM constitue une file circulaire, il faut, pour éviter la destruction d'informations ou l'apparition d'informations erronées, empêcher tout croisement des pointeurs d'écriture et de lecture. Ce problème est bien connu, car il se pose également dans les processeurs, ainsi que les moyens pour les résoudre. Pour cette raison, les moyens destinés à fournir une indication de mémoire RAM pleine FP ou vide FV, afin de bloquer respectivement toute nouvelle écriture ou toute nouvelle lecture, ne seront que brièvement décrits en mentionnant essentiellement les aspects spécifiques à la présente invention.

Les pointeurs d'écriture et de lecture sont incrémentés en fin de cycle d'écriture ou de lecture et indiquent alors l'adresse du prochain mot à écrire ou à lire. Une égalité des pointeurs d'écriture PTE et de lecture PTL après un cycle d'écriture indique que la mémoire RAM est pleine et qu'aucune écriture supplémentaire ne peut être acceptée si elle n'est précédée par au moins une lecture. Symétriquement, une égalité entre PTE et PTL après une lecture signifie que la mémoire RAM est vide et qu'aucune lecture

6

ne pourra être effectuée dans la RAM avant nouvelle écriture.

La détection des états RAM pleine et RAM vide peut être effectuée à l'aide de portes ET qui reçoivent, sur une entrée, un signal indiquant l'égalité des pointeurs et, sur l'autre entrée, un signal indiquant que la dernière opération est une écriture pour une des portes, un signal indiquant que la dernière opération est une lecture pour l'autre porte. Les indications de sortie FP et FV apparaissent alors qu'un nouveau cycle d'horloge est déjà en cours. Elles sont utilisées, dans la logique d'allocation (figure 6), pour interdire toute prise en compte de demande d'écriture dans le cas FP = 1, de lecture dans le cas FV = 1. Elles stoppent de plus le cycle en cours s'il a été retenu par l'opération proscrite, par remise à 0 de la bascule 84a ou 84b.

De plus, dans le cas de file pleine, on doit inhiber la sortie du créneau d'écriture en mémoire WM et, pour cette raison, la génération du signal FP à partir du positionnement du pointeur d'écriture doit être aussi rapide que possible de façon à ne pas obliger à trop retarder la génération du signal WM. Ce créneau WM est destiné à fournir le signal d'écriture en mémoire. Il ne doit être généré qu'après un temps δ qui suit le front montant du signal d'horloge H. Il peut être obtenu à l'aide d'une porte réalisant l'opération logique :

$$WM = E \times \overline{FP} \times H_\delta \qquad (2)$$

où $H_\delta$ est le signal H retardé d'une valeur au moins égale à δ.

La figure 7 montre, de façon extrêmement schématisée, une constitution possible du circuit de gestion d'adresses. Ce circuit comporte des pointeurs de lecture et d'écriture 100a et 100b dont les sorties attaquent le multiplexeur 28 et un circuit de détection de limite 102. L'élément d'entrée de ce dernier est constitué par un circuit additionneur 104, qui opère en soustracteur (inversion d'un des signaux d'entrée) pour effectuer la différence entre les valeurs des deux pointeurs, dont le signal de sortie est appliqué à un réseau de portes 106, disposées de façon à correspondre à la capacité et à la disposition des pointeurs. Ces pointeurs peuvent par exemple être constitués de compteurs synchrones à quatorze étages, constamment activés par le signal d'horloge H mais dont le fonctionnement n'est effectif qu'en cas de validation. Les pointeurs comportent une remise à zéro générale RZG permettant de positionner l'ensemble des entrées des compteurs, constituant ces pointeurs, à 0.

Le pointeur d'écriture PTE indique l'adresse de la prochaine écriture en mémoire. Il est incrémenté à la fin de chaque cycle d'écriture sur le front montant d'horloge H. De façon similaire, le pointeur d'écriture PTL pointe le prochain mot mémoire à lire. Il est, comme le compteur constituant le pointeur de lecture, incrémenté en fin de cycle.

La détection de file pleine et de file vide est assurée par deux portes OU-NON 108a et 108b. La porte 108a reçoit le signal de sortie du réseau de portes 106 et le signal $\bar{E}^*$ provenant d'une bascule 110 dont le montage et le fonctionnement ne seront pas décrits, car ils sont évidents. La porte 108a comprend une entrée supplémentaire IFP qui permet d'inhiber la fonction de détection de file pleine par application d'un signal externe de niveau 1. Une telle inhibition peut être nécessaire pour certaines applications. La porte OU-NON 108b reçoit, de façon symétrique, le signal de sortie du réseau de portes 106 et le signal $\bar{L}^*$ provenant de la bascule 110. Mais cette porte ne comporte pas d'entrée d'inhibition.

Une porte OU 112 destinée à générer le signal d'écriture WM comporte trois entrées. L'une reçoit le signal de pile pleine FP. Une seconde reçoit le signal $\bar{E}$. Une troisième reçoit le signal d'horloge par l'intermédiaire d'un élément 114 fournissant un retard au moins égal à δ, de sorte que la porte 112 répond à la fonction (2) ci-dessus.

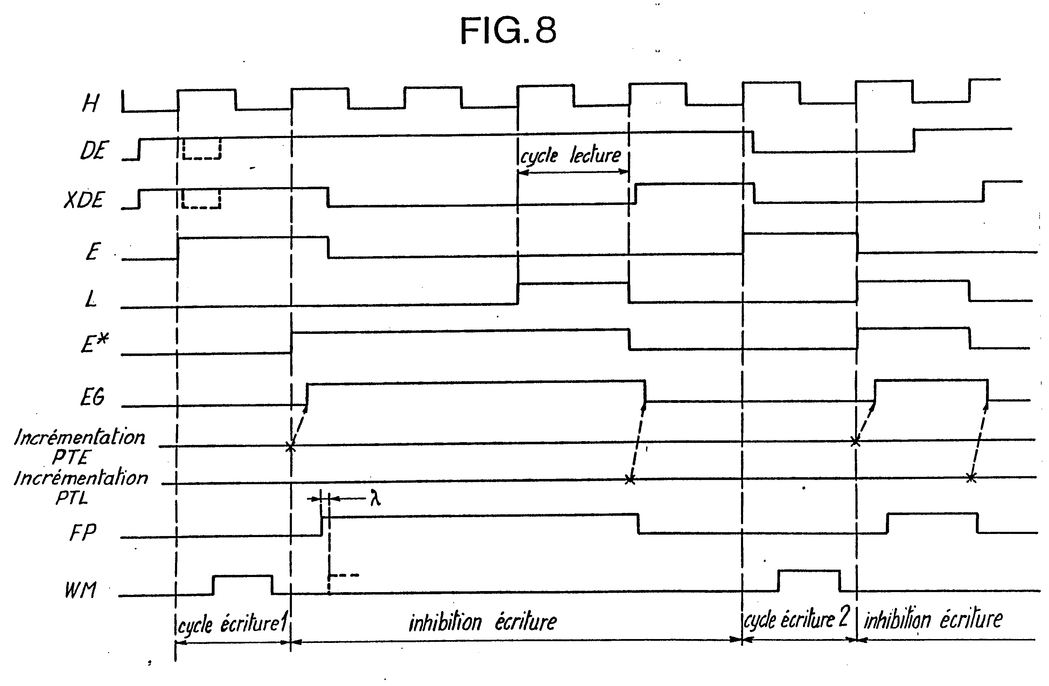

A titre de simple exemple, on a représenté sur la figure 8 l'évolution des divers signaux qui interviennent dans le fonctionnement, lorsque la file est pleine à l'issue d'une opération d'écriture. Dans le cas montré en figure 8, le cycle d'écriture 1 remplit la pile et provoque l'apparition d'une indication de mémoire RAM pleine (passage à 1 de FP). Lorsque l'ordre d'écriture suivant E apparaît, il est inhibé après un délai qui correspond à une garde de sécurité et interdit l'apparition du signal d'écriture WM. L'inhibition se poursuit jusqu'à ce que le signal E soit repassé au niveau 1. Ce retour au niveau 1 est autorisé par une opération de lecture. Un nouveau cycle d'écriture peut alors avoir lieu (cycle d'écriture 2 sur la Figure 8). Ce cycle d'écriture remplit de nouveau la file et provoque une nouvelle inhibition.

L'essentiel de l'invention est que ce système de gestion permet d'effectuer l'opération de lecture de données dans les registres de sortie à un instant quelconque par rapport à l'écriture d'une information dans le registre d'entrée, la simultanéité d'opération d'écriture et de lecture en mémoire RAM étant interdite et rendue impossible par inhibition de l'opération d'écriture ou de lecture avant exécution de l'autre opération (lecture ou écriture).

## Revendications

1. Unité de stockage temporaire de données organisée en file d'attente premier entré-premier sorti FIFO, comprenant une mémoire vive de lecture-écriture à accès aléatoire (10) et un système de gestion, l'unité comportant un premier et un deuxième registres tampon de sortie (30a, 30b) en cascade en aval de la mémoire vive et comportant également un registre tampon d'entrée (36) en amont de la mémoire vive, caractérisée en ce que le système de gestion comporte un premier système de gestion (38) destiné à gérer le registre d'entrée et un deuxième système de·gestion (46) destiné à gérer les registres de sortie, le premier système de gestion comportant :

un premier moyen (52) de mémorisation d'une demande d'écriture ($E_c$),

un deuxième moyen (54) de mémorisation de l'état du registre d'entrée (36), des moyens (58, 60) commandant le basculement du deuxième moyen de mémorisation en réponse à la présence d'une demande externe d'écriture mémorisée lorsque ce deuxième moyen de mémorisation est dans un état indiquant que le registre est vide,

un autre moyen (62, 64) pour engendrer, sauf lorsqu'il reçoit un premier signal d'inhibition $\bar{E}$, un signal interne de demande d'écriture (DE) à destination de la mémoire vive lorsque le deuxième moyen de mémorisation (54) indique que le registre d'entrée (36) est chargé et tant que la mémoire vive n'a pas enregistré la demande interne d'écriture (DE), cet autre moyen ayant également pour fonction de ramener le deuxième moyen de mémorisation (54) dans un état indiquant que le registre (36) est vide lorsque la demande interne d'écriture a été prise en compte,

et le deuxième système de gestion (46) comportant :

un troisième moyen (70a) de mémorisation de l'état du premier registre de sortie (30a),

un quatrième moyen (70b) de mémorisation de l'état du deuxième registre de sortie (30b),

un moyen (80, 76) pour effectuer, sauf lorsqu'il reçoit un second signal d'inhibition $\bar{L}$ différent du premier, une demande interne de lecture (DL) à destination de la mémoire vive lorsque le troisième moyen (70a) de mémorisation est dans un état indiquant que le premier registre de sortie (30a) est vide et tant que la demande interne de lecture n'a pas été prise en compte, ledit troisième moyen étant alors basculé dans un état indiquant que le premier registre de sortie (30a) est plein dès que la demande interne de lecture a été prise en compte,

un dispositif (72, 74) qui commande le basculement du quatrième moyen (70b) de mémorisation lorsque le troisième moyen de mémorisation indique que le premier registre de sortie est plein et que ledit quatrième moyen de mémorisation indique que le deuxième registre de sortie est vide, ce dispositif (72) agissant simultanément sur le troisième moyen de mémorisation (70a) pour que ce dernier indique un état libre du premier registre de sortie (30a),

un moyen pour effectuer un basculement du quatrième moyen de mémorisation lorsque ce dernier indique que le deuxième registre de sortie est dans l'état « plein » et qu'un signal externe de demande de lecture ($L_E$) du deuxième registre de sortie (30b) a été émis, l'unité de stockage comportant en outre une logique de résolution des conflits (18) entre demande interne d'écriture et demande interne de lecture de la mémoire vive par émission de l'un des premier respectivement second signaux d'inhibition $\bar{L}$ et $\bar{E}$.

2. Unité de stockage selon la revendication 1, caractérisée en ce que lesdits moyens (58, 60) commandant le basculement du deuxième moyen de mémorisation (54) en réponse à la présence d'une demande externe d'écriture mémorisée commandent également le basculement du premier moyen (52) de mémorisation de telle sorte que ce dernier indique alors une absence de demande externe d'écriture mémorisée.

3. Unité de stockage selon la revendication 1 ou 2, caractérisée en ce que l'autre moyen (62, 64) pour engendrer un signal de demande interne d'écriture (DE) émet également le signal de demande interne d'écriture lorsque le premier moyen (52) de mémorisation est dans un état indiquant qu'une demande externe d'écriture est mémorisée.

4. Unité de stockage selon l'une quelconque des revendications 1 à 3, caractérisée en ce que le moyen (80, 76) pour effectuer une demande interne de lecture (DL) à destination de la mémoire vive, engendre également une demande de lecture lorsque le quatrième moyen de mémorisation est dans un état indiquant que le deuxième registre de sortie est vide.

**Claims**

1. A unit for temporary data storage of the first in-first out (FIFO) stack type, comprising a random access read-write memory (10) and a handling system, the unit comprising a first and a second output buffer registers (30a, 30b) connected in series relation to the output of the RAM and further comprising an input buffer register (36) connected to the input of the RAM, characterized in that the handling system comprises a first handling system (38) for handling the input register and a second handling system (46) for handling the output registers, the first handling system comprising :

first means (52) for storing a write request ($E_c$),

second means (54) for storing the condition of the input register (36), means (58, 60) for setting the second storage means in response to the presence of a stored external writing request when the second storage means is in a condition indicating that the register is empty,

other means (62, 64) for generating, except when it receives a first disabling signal $\bar{E}$, an internal write request signal (DE) directed to said RAM when the second storage means (54) indicates that the input buffer (36) is loaded and as long as the RAM has not acknowledged the internal writing request (DE), said other means also being arranged for re-setting the second storage means (54) into a condition indicating that the register (36) is empty when the internal writing request has been acknowledged, and the second handling system (46) comprising :

third means (70a) for storing the condition of the first output register (30a),

fourth means (70b) for storing the condition of the second buffer register (30b),

means (80, 76) for generating, except when it receives a second disabling signal ($\bar{L}$) which differs from the first, an internal reading request (DL) directed to the RAM when the third storage means (70a) is in a condition indicating that the first output register (30a) is empty and as long as the internal reading request has not been acknowledged, said third means being then set into a condition indicating that the first output register (30a) is full as soon as the internal reading request has been acknowledged,

a device (72, 74) which controls setting of the fourth storage means (70b) when the third storage means indicates that the first output register is full and said fourth storage means indicates that the second output register is empty, said device (72) simultaneously driving the third storage means (70a) for the latter to indicate a « free » condition of the first output register (30a),

means for setting the fourth storage means when the latter indicates that the second output register is in « full » condition and an external reading request signal (LE) of the second output register (30b) has been delivered, the storage unit further comprising a logic circuit for solving conflicts (18) between internal writing request into and internal reading request out of the RAM by sending one of the first and second disabling signals ($\bar{L}$ and $\bar{E}$).

2. Storage unit according to claim 1, characterized in that said means (58, 60) for setting the second storing means (54) in response to the presence of a stored external writing request also sets the first storing means, whereby the latter then indicates there is no external writing request which is stored.

3. Storage unit according to claim 1 or 2, characterized in that the other means (62, 64) for generating an internal writing request (DE) also delivers the internal writing request signal when the first storage means (52) is in a condition indicating that an external writing request is stored.

4. Storage unit according to any one of claims 1-3, characterized in that the means (80, 76) for generating an internal reading request (DL) directed to the RAM also generates a reading request when the fourth storing means is in a condition indicating that the second output buffer register is empty.

**Patentansprüche**

1. Einrichtung zur Zwischenspeicherung von Daten, organisiert gemäß einer Warteschlange nach dem Prinzip « first in-first out », umfassend einen Schreib-Lese-Zwischenspeicher (10) mit wahlfreiem Zugriff und ein Regelungssystem, wobei die Einrichtung ein erstes und ein zweites Ausgangs-Pufferregister (30a, 30b) aufweist, die dem Zwischenspeicher in Reihe nachgeschaltet sind, und wobei sie außerdem ein dem Zwischenspeicher vorgeschaltetes Eingangs-Pufferregister aufweist, dadurch gekennzeichnet, daß das Regelungssystem ein erstes Regelungssystem (38) zur Regelung des Eingangsregisters und ein zweites Regelungssystem (46) zur Regelung der Ausgangsregister aufweist, wobei das erste Regelungssystem umfaßt :

eine erste Einrichtung (52) zur Speicherung einer Schreib-Anforderung ($E_c$),

eine zweite Einrichtung (54) zur Speicherung des Zustandes des Eingangsregisters (36), Mittel (58, 60) zum Steuern der Umschaltung der zweiten Speichereinrichtung als Antwort auf das Vorhandensein einer externen Schreibanforderung, welche gespeichert wird, wenn diese zweite Speichereinrichtung anzeigt, daß das Register leer ist,

eine weitere Einrichtung (62, 64), die außer in dem Fall, in dem sie ein erstes Sperrsignal $\bar{E}$ empfängt, ein internes Schreibanforderungssignal (DE) an die Adresse des Zwischenspeichers erzeugt, wenn die zweite Speichereinrichtung (54) anzeigt, daß das Eingangsregister (36) geladen ist und sofern der Zwischenspeicher die interne Schreibanforderung (DE) nicht gespeichert hat, wobei diese weitere Einrichtung außerdem die Aufgabe hat, die zweite Speichereinrichtung (54) in einen Zustand zu schalten, in welchem sie anzeigt, daß das Register (36) leer ist, während die interne Schreibanforderung in den Zähler übernommen wurde,

und wobei das zweite Regelungssystem (46) umfaßt :

eine dritte Einrichtung (70a) zur Speicherung des Zustandes des ersten Ausgangsregisters (30a),

eine vierte Einrichtung (70b) zur Speicherung des Zustandes des zweiten Ausgangsregisters (30b),

eine Einrichtung (80, 76), die außer in dem Fall, in dem sie ein vom ersten verschiedenes zweites Sperrsignal $\bar{L}$ empfängt, eine interne Leseanforderung (DL) an die Adresse des Zwischenspeichers erzeugt, wenn die dritte Speichereinrichtung (70a) anzeigt, daß das erste Ausgangsregister (30a) leer ist und sofern die interne Leseanforderung nicht in den Zähler übernommen worden ist, wobei diese dritte Einrichtung dann in einen Zustand umgeschaltet wird, in welchem sie anzeigt, daß das erste Ausgangsregister (30a) voll ist und die interne Leseanforderung in den Zähler übernommen worden ist,

eine Anordnung (72, 74), welche das Umschalten der vierten Speichereinrichtung steuert, wenn die dritte Speichereinrichtung anzeigt, daß das erste Ausgangsregister voll ist und die vierte Speichereinrichtung anzeigt, daß das zweite Ausgangsregister leer ist, wobei diese Anordnung (72) gleichzeitig auf die dritte Speichereinrichtung (70a) einwirkt, damit diese letztere einen Freizustand des ersten Ausgangsregisters (30a) anzeigt,

eine Einrichtung zum Umschalten der vierten Speichereinrichtung, wenn die letztere anzeigt, daß das zweite Ausgangsregister « voll » ist und daß ein externes Leseanforderungssignal (L$_E$) des zweiten Ausgangsregisters (30b) ausgegeben worden ist, wobei die Speichereinrichtung außerdem eine logische Schaltung (18) zur Lösung von Konflikten zwischen der internen Schreibanforderung und der internen Leseanforderung des Zwischenspeichers durch Ausgabe eines der ersten bzw. zweiten Sperrsignale $\bar{L}$ und $\bar{E}$ aufweist.

2. Speichereinrichtung nach Anspruch 1, dadurch gekennzeichnet, daß die Mittel (58, 60) zum Steuern der Umschaltung der zweiten Speichereinrichtung (54) als Antwort auf das Vorhandensein einer externen, gespeicherten Schreibanforderung außerdem die Umschaltung der ersten Speichereinrichtung (52) in der Weise steuert, daß diese letztere dann ein Fehlen der externen gespeicherten Schreibanforderung anzeigt.

3. Speichereinrichtung nach Anspruch 1 oder 2, dadurch gekennzeichnet, daß die weitere Einrichtung (62, 64) zur Erzeugung eines internen Schreibanforderungssignals (DE) außerdem das interne Schreibanforderungssignal ausgibt, wenn die erste Speichereinrichtung in einem Zustand ist, der anzeigt, daß eine externe Schreibanforderung gespeichert ist.

4. Speichereinrichtung nach einem der Ansprüche 1 bis 3, dadurch gekennzeichnet, daß die Einrichtung (80, 76) zur Erzeugung einer internen Leseanforderung (DL) an die Adresse des Zwischenspeichers außerdem eine Leseanforderung erzeugt, wenn die vierte Speichereinrichtung anzeigt, daß das zweite Ausgangsregister leer ist.

FIG.1

FIG.2

FIG.3

0 109 898

0 109 898

FIG.4

FIG.5

2

FIG.6

FIG.7

# FIG.8

cycle lecture

cycle écriture 1 | inhibition écriture | cycle écriture 2 | inhibition écriture

H
DE
XDE
E
L
E*
EG
Incrémentation PTE
Incrémentation PTL
FP
WM

λ

0 109 898